# EUROPEAN PATENT SPECIFICATION

(11) **EP 4 393 987 B1**
(45) Date of publication and mention of the grant of the patent: **03.12.2025**
(21) Application number: 23220406.5
(22) Date of filing: 27.12.2023
(51) Int. Cl.: C08F 299/06, C08G 18/24, C08G 18/48, C08G 18/67, C08G 18/76, C08J 5/04, C08J 11/24, C08J 11/28

(54) **METHOD FOR DEGRADING POLYURETHANE ACRYLIC RESIN MATERIAL, POLYURETHANE ACRYLIC RESIN, COMPOSITION, PREPARATION METHOD AND COMPOSITE MATERIAL THEREOF**
VERFAHREN ZUM ABBAU VON POLYURETHANACRYLHARZMATERIAL, POLYURETHANACRYLHARZ, ZUSAMMENSETZUNG, HERSTELLUNGSVERFAHREN UND VERBUNDSTOFFMATERIAL DARAUS
PROCÉDÉ DE DÉGRADATION D'UN MATÉRIAU DE RÉSINE ACRYLIQUE DE POLYURÉTHANE, RÉSINE ACRYLIQUE DE POLYURÉTHANE, COMPOSITION, PROCÉDÉ DE PRÉPARATION ET MATÉRIAU COMPOSITE ASSOCIÉ

(30) Priority: 30.12.2022 TW 111150872
(43) Date of publication of application: 03.07.2024
(73) Proprietor: Swancor Innovation & Incubation Co., Ltd., Nantou City, Nantou County 540028 (TW)
(72) Inventor: KAO, Jun-Qi, 540028 Nantou City (TW)
(74) Representative: Ter Meer Steinmeister & Partner

(56) References cited:
- EP-B1- 2 183 311
- CA-A1- 3 121 839
- CN-A- 103 030 767
- CN-A- 109 486 066
- CN-B- 104 694 064
- US-A1- 2009 012 202
- US-A1- 2020 140 593
- US-B1- 6 350 826
- S�NCHEZ-CADENA LORENA E ET AL: "Solvolysis of acrylate-urethane coatings cured by electron-beam and UV radiation", PROCESS IN ORGANIC COATINGS, ELSEVIER BV, NL, vol. 136, 22 August 2019 (2019-08-22), XP085834368, ISSN: 0300-9440, [retrieved on 20190822], DOI: 10.1016/J.PORGCOAT.2019.105268

## Description

### BACKGROUND

### Technical Field

The present invention relates to a method for degrading a polyurethane material. More particularly, the present invention relates to a method for degrading a network-containing cross-linked polyurethane acrylic resin material. Described are a polyurethane acrylic resin, a composition, a preparation method and a composite material thereof.

### Description of Related Art

Polyurethane acrylic resin has a wide design space and can be adjusted in rigidly or flexibly according to the requirement. The advantages of the molecular structure of the polyurethane acrylic resin include good corrosion resistance, good wear resistance, good adhesion, good heat resistance, good mechanical property, good wetting property for a variety of fibers, etc., and are suitable for the structure design of the composite material. However, due to the abovementioned excellent characteristics, it is difficult to decompose and recycle this type of the composite material, which will eventually lead to problems such as lack of landfills and environmental pollution. Therefore, the decomposition and recycling of the waste composite material have become the important issues.

Polyurethane acrylic resin composite material is difficult to recycle by melting or dissolving because the polyurethane acrylic resin therein is in a three-dimensional network crosslinked state. According to the existing technology, polyurethane acrylic resin composite material only can be recycled by the method of huge consumption of energy or time and high cost, such as burying and incineration, there is a lack of degradable recycling technology. However, the two treatment methods of burying and incineration are gradually becoming unfeasible in the future. The degradable resin should be developed to fulfill the recycling the composite material to achieve the purpose of waste reduction. Disclosed in CN103030767A and in Lorena E. Sánchez-Cadena et al., Progress in Organic Coatings, Vol. 136 (2019), 105268 are methods to degradation of a cured polyurethane acrylic resin using, respectively, water and ethylene glycol as reagent. Neither of these documents disclose the use of a compound comprising both an - OH and an -NH/NH2 group. Disclosed in CN104694064B and US2020140593A is the use of use of a compound comprising both an -OH and an -NH/NH2 group for the degradation of polyurethane, but not of a cured polyurethane.

Therefore, how to find an appropriate degradation solution to degrade the polyurethane acrylic resin and then achieve the purpose of recycling, which is the goal of the relevant industry.

### SUMMARY

According to one aspect of the present invention, a method for degrading a polyurethane acrylic resin material includes steps as follows. The polyurethane acrylic resin material is provided, wherein the polyurethane acrylic resin material is obtained by curing a polyurethane acrylic resin. A degradation solution is provided, wherein the degradation solution at least includes a degradation compound, and the degradation compound at least includes a reactive NH or NH2 group and a reactive OH group. A mixing step is performed, wherein the polyurethane acrylic resin material is mixed with the degradation solution to form a degradation mixture. A heating step is performed, wherein the degradation mixture is heated to a degradation temperature and maintained a degradation time to degrade the polyurethane acrylic resin material.

According to the method for degrading the polyurethane acrylic resin material of the foregoing aspect, the polyurethane acrylic resin material can be a cured polyurethane acrylic resin or a composite material containing cured polyurethane acrylic resin.

According to the method for degrading the polyurethane acrylic resin material of the foregoing aspect, the composite material containing cured polyurethane acrylic resin can include the polyurethane acrylic resin and a fiber.

According to the method for degrading the polyurethane acrylic resin material of the foregoing aspect, the fiber can be a glass fiber, a carbon fiber, a polyamide fiber or a mixture thereof.

According to the method for degrading the polyurethane acrylic resin material of the foregoing aspect, the degradation compound can have a structure represented by formula (i): 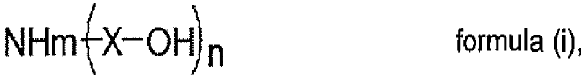 wherein X is an alkyl group or an oxyalkyl group, m is 1 or 2 and m + n = 3.

According to the method for degrading the polyurethane acrylic resin material of the foregoing aspect, the degradation temperature can be from 135°C to a boiling point temperature of the degradation solution.

According to the method for degrading the polyurethane acrylic resin material of the foregoing aspect, the degradation time can be 2 hours to 24 hours.

According to the method for degrading the polyurethane acrylic resin material of the foregoing aspect, more than 40% of a total weight of the polyurethane acrylic resin can be an oligomer.

According to the method for degrading the polyurethane acrylic resin material of the foregoing aspect, the oligomer can have a structure represented by formula (I): 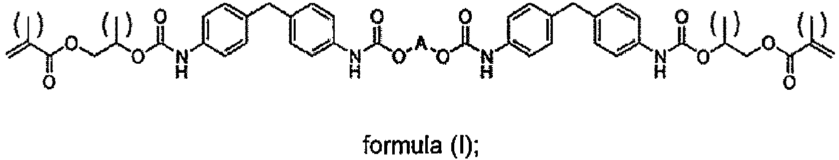 wherein A is a polyethoxy group, a polypropoxy group or a polytetrahydrofuran group.

According to the method for degrading the polyurethane acrylic resin material of the foregoing aspect, a preparation of the polyurethane acrylic resin can include following steps. A polyurethane polymerization step is performed, wherein an isocyanate compound, an inhibitor and a catalyst are mixed in a diluting monomer, and heated to a first temperature to obtain a first mixture, then a polyol compound is added to the first mixture and maintained at the first temperature to react to obtain a second mixture. A polyurethane acrylic esterification step is performed, wherein a hydroxyl-containing (methyl)acrylate compound is added to the second mixture and maintained at the first temperature to react to obtain the polyurethane acrylic resin.

According to the method for degrading the polyurethane acrylic resin material of the foregoing aspect, the preparation of the polyurethane acrylic resin can further include a diluting step, wherein after the second mixture added with the hydroxyl-containing (methyl)acrylate compound reacting at the first temperature, the second mixture is cooled and the diluting monomer is added to obtain the polyurethane acrylic resin.

According to the method for degrading the polyurethane acrylic resin material of the foregoing aspect, the isocyanate compound can be a bifunctional isocyanate compound or a polyfunctional isocyanate compound.

According to the method for degrading the polyurethane acrylic resin material of the foregoing aspect, the bifunctional isocyanate compound or the polyfunctional isocyanate compound can be an aromatic ring isocyanate.

According to the method for degrading the polyurethane acrylic resin material of the foregoing aspect, the aromatic ring isocyanate can be a toluene diisocyanate, a poly(methylene phenyl isocyanate), a diphenylmethane diisocyanate or a mixture thereof.

According to the method for degrading the polyurethane acrylic resin material of the foregoing aspect, the polyol compound can be a bifunctional polyol compound or a polyfunctional polyol compound, and a number average molecular weight of the polyol compound is less than 2000.

According to the method for degrading the polyurethane acrylic resin material of the foregoing aspect, the polyol compound can be a polyoxyethylene ether, a polyoxypropylene ether, a polytetrahydrofuran or a mixture thereof.

According to the method for degrading the polyurethane acrylic resin material of the foregoing aspect, the polyurethane acrylic resin can have an oligomer represented by formula (I): 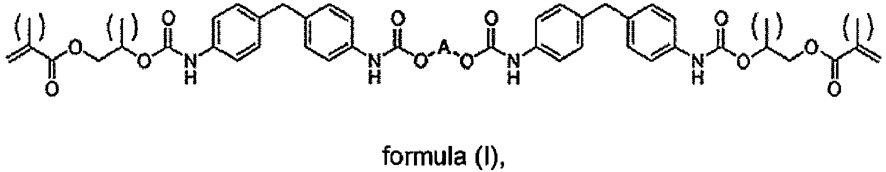 wherein A is a polyethoxy group, a polypropoxy group or a polytetrahydrofuran group.

According to the method for degrading the polyurethane acrylic resin material of the foregoing aspect, an equivalent ratio of a NCO group of the isocyanate compound to an OH group of the polyol compound can be 1.5:1 to 10:1.

According to the method for degrading the polyurethane acrylic resin material of the foregoing aspect, the hydroxyl-containing (methyl)acrylate compound can be a hydroxyethyl methacrylate, a hydroxyethyl acrylate, a hydroxypropyl methacrylate, a hydroxypropyl acrylate or a mixture thereof.

According to the method for degrading the polyurethane acrylic resin material of the foregoing aspect, the diluting monomer can be a free radical curable diluting monomer, and is a (methyl)methacrylate, a (methyl)ethyl acrylate, a (methyl)hydroxyethyl acrylate, a (methyl)hydroxypropyl acrylate, a (methyl)isobornyl acrylate, a (methyl)cyclohexyl acrylate, a (methyl) tetrahydrofurfuryl acrylate, a styrene, a methyl styrene, a vinyl toluene or a mixture thereof.

According to the method for degrading the polyurethane acrylic resin material of the foregoing aspect, the first temperature can be 40°C to 80°C.

According to the method for degrading the polyurethane acrylic resin material of the foregoing aspect, the catalyst can be an organic tin, an organic bismuth or an organic zinc, and an added amount of the catalyst is 50 ppm to 200 ppm of a total content of the polyurethane acrylic resin.

According to the method for degrading the polyurethane acrylic resin material of the foregoing aspect, an equivalent ratio of an OH group of the hydroxyl-containing (methyl)acrylate compound to a NCO group of the isocyanate compound remaining after the polyurethane polymerization step can be 1:1 to 1.05:1.

Described herein is the provision of a composition for preparing a polyurethane acrylic resin. The composition for preparing the polyurethane acrylic resin includes an isocyanate compound, a polyol compound, a hydroxyl-containing (methyl)acrylate compound and a diluting monomer.

Further described herein is a method for preparing a polyurethane acrylic resin includes steps as follows. A polyurethane polymerization step is performed, wherein an isocyanate compound, an inhibitor and a catalyst are mixed in a diluting monomer, and heated to a first temperature to obtain a first mixture, then a polyol compound is added to the first mixture and maintained at the first temperature to react to obtain a second mixture. A polyurethane acrylic esterification step is performed, wherein a hydroxyl-containing (methyl)acrylate compound is added to the second mixture and maintained at the first temperature to react to obtain a third mixture. A diluting step is performed, wherein the third mixture is cooled and the diluting monomer is added to obtain the polyurethane acrylic resin.

Still further described herein is the provision of a polyurethane acrylic resin. The polyurethane acrylic resin includes an oligomer represented by formula (I): 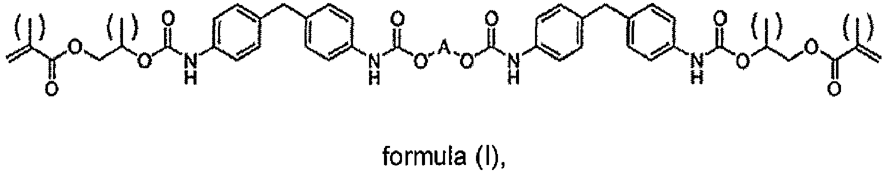 wherein A is a polyethoxy group, a polypropoxy group or a polytetrahydrofuran group.

Finally, described is the provision of a composite material containing cured polyurethane acrylic resin. The composite material containing cured polyurethane acrylic resin includes a polyurethane acrylic resin and a fiber, wherein the polyurethane acrylic resin includes an oligomer represented by formula (I): 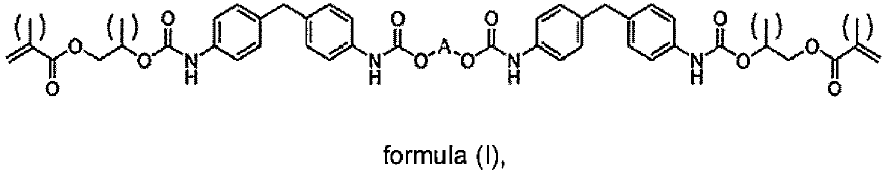 wherein A is a polyethoxy group, a polypropoxy group or a polytetrahydrofuran group.

As described herein, the fiber can be a glass fiber, a carbon fiber, a polyamide fiber or a mixture thereof.

### BRIEF DESCRIPTION OF THE DRAWINGS

The present invention can be more fully understood by reading the following detailed description of the embodiment, with reference made to the accompanying drawings as follows:
Fig. 1 is a flow chart of a method for degrading a polyurethane acrylic resin material according to one embodiment of the present invention.
Fig. 2 is a flow chart of a method for preparing a polyurethane acrylic resin as described herein.
Fig. 3 is a flow chart of a method for preparing a polyurethane acrylic resinas described herein.

### DETAILED DESCRIPTION

The present invention will be further exemplified by the following specific embodiments. However, the embodiments can be applied to various inventive concepts and can be embodied in various specific ranges. The specific embodiments are only for the purposes of description, and are not limited to these practical details thereof.

### <Method for Degrading Polyurethane Acrylic Resin Material>

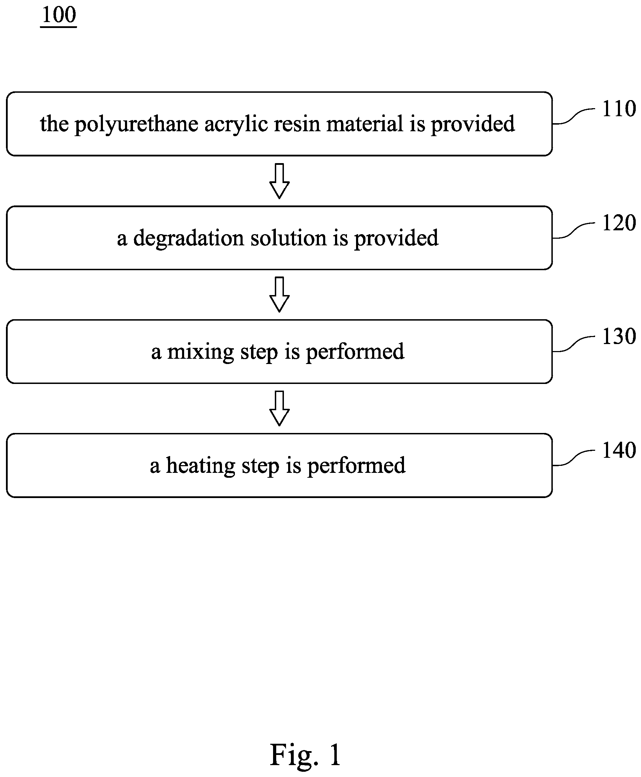

Reference is made to Fig. 1, which is a flow chart of a method for degrading a polyurethane acrylic resin material 100 according to one embodiment of the present invention. In Fig. 1, the method for degrading the polyurethane acrylic resin material 100 includes a step 110, a step 120, a step 130 and a step 140.

In the step 110, the polyurethane acrylic resin material is provided, which is obtained by curing a polyurethane acrylic resin. In detail, the polyurethane acrylic resin material of the present disclosure can be a cured polyurethane acrylic resin or a composite material containing cured polyurethane acrylic resin. The cured polyurethane acrylic resin can be cured at the room temperature or the high temperature by adding the conventional accelerator and the free radical initiator to form a network cross-linked cured product. Furthermore, the composite material containing cured polyurethane acrylic resin is obtained by impregnating the polyurethane acrylic resin and a fiber at the room temperature or the high temperature, and the fiber can be a glass fiber, a carbon fiber, a polyamide fiber or a mixture thereof, but it is not limited thereto.

In the step 120, a degradation solution is provided, which at least includes a degradation compound, and the degradation compound at least includes a reactive NH or NH₂ group and a reaction OH group. Specifically, the reactive NH or NH₂ group and the reactive OH group are the functional groups that can react with the polyurethane acrylic resin and can be performed the ammonolysis and alcoholysis without causing the damage to the fiber in the composite material. In detail, the degradation compound can have a structure represented by formula (i): 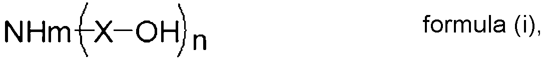 wherein X is an alkyl group or an oxyalkyl group, m is 1 or 2 and m + n = 3. The degradation compound can still be sufficiently reactive to the polyurethane acrylic resin without adding the catalyst to achieve the purpose of high-efficiency degradation.

In the step 130, a mixing step is performed, wherein the polyurethane acrylic resin material is mixed with the degradation solution to form a degradation mixture.

In the step 140, a heating step is performed, wherein the degradation mixture is heated to a degradation temperature and maintained a degradation time to degrade the polyurethane acrylic resin material, wherein the degradation temperature can be from 135°C to a boiling point temperature of the degradation solution, and the degradation time can be 2 hours to 24 hours.

Therefore, in the present invention, the polyurethane acrylic resin material containing network cross-linking is reacted with the degradation solution at least containing a reactive NH or NH₂ group and a reactive OH group by ammonolysis and alcoholysis, and the temperature is raised to achieve the high-efficiency degradation effect. The highest degradation temperature can be performed at the boiling point temperature of the degradation solution, and the excess degradation solution can be used as the solvent during the degradation process with the purpose of diluting and suspending the fiber. After the degradation, the volatile substance can be separated by the reduced pressure distillation method, and the volatile substance is the degradation solution containing the reactive NH or NH₂ group and the reactive OH group, and can be reused. Furthermore, after degrading the composite material containing cured polyurethane acrylic resin, the polyurethane acrylic resin can be decomposed and removed to form the recycled fiber without plastic adhesion, which can realize the recycling mechanism for separating the fiber and the organic substance.

According to the method for degrading the polyurethane acrylic resin material 100 of the present invention, more than 40% of a total weight of the polyurethane acrylic resin is an oligomer, which has a structure represented by formula (I): 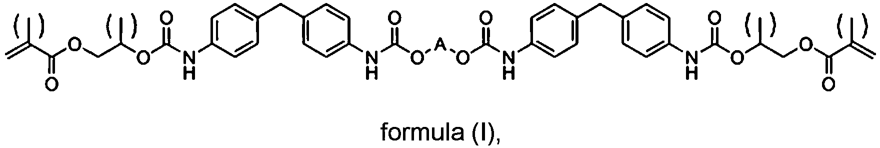 wherein A is a polyethoxy group, a polypropoxy group or a polytetrahydrofuran group.

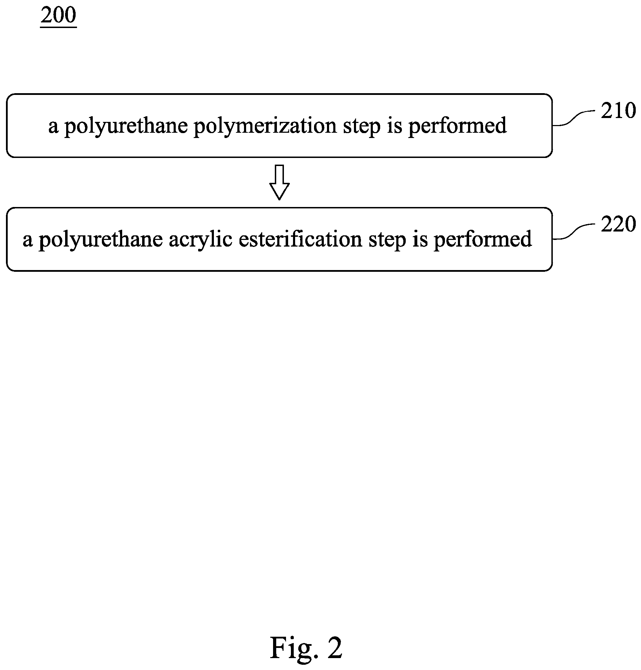

According to the method for degrading the polyurethane acrylic resin material 100 of the present invention, a preparation of the polyurethane acrylic resin can be referred to Fig. 2, wherein Fig. 2 is a flow chart of a method for preparing a polyurethane acrylic resin 200 as described herein. In Fig. 2, the method for preparing the polyurethane acrylic resin 200 includes a step 210 and a step 220.

In the step 210, a polyurethane polymerization step is performed, wherein an isocyanate compound, an inhibitor and a catalyst are mixed in a diluting monomer, and heated to a first temperature to obtain a first mixture, then a polyol compound is added to the first mixture and maintained at the first temperature to react to obtain a second mixture.

In the step 220, a polyurethane acrylic esterification step is performed, wherein a hydroxyl-containing (methyl)acrylate compound is added to the second mixture and maintained at the first temperature to react to obtain the polyurethane acrylic resin.

The aforementioned isocyanate compound can be a bifunctional isocyanate compound or a polyfunctional isocyanate compound. The bifunctional isocyanate compound or the polyfunctional isocyanate compound can be an aromatic ring isocyanate, and the aromatic ring isocyanate can be a toluene diisocyanate, a poly(methylene phenyl isocyanate), a diphenylmethane diisocyanate or a mixture thereof. In detail, the aforementioned isocyanate compound can be but not limited to one or more of MR200 (purchased from TOSOH), PM200 (purchased from WANHUA), M20S (purchased from BASF), 44V20 (purchased from covestro AG), 5005 (purchased from HUNTSMAN), NM (purchased from TOSOH), MDI-50 (purchased from WANHUA).

The aforementioned inhibitor is commonly known that added to ensure the storage (stability) of the resin in general free radical curing system resin, and the suitable inhibitor can be selected from the known inhibitor to add according to the requirement, and will not be described herein.

The aforementioned catalyst can be an organic tin, an organic bismuth or an organic zinc, and an added amount of the catalyst can be 50 ppm to 200 ppm of a total content of the polyurethane acrylic resin.

The aforementioned diluting monomer is a free radical curable diluting monomer, which can be a (methyl)methacrylate, a (methyl)ethyl acrylate, a (methyl)hydroxyethyl acrylate, a (methylhydroxypropyl acrylate, a (methyl)isobornyl acrylate, a (methyl)cyclohexyl acrylate, a (methyl) tetrahydrofurfuryl acrylate, a styrene, a methyl styrene, a vinyl toluene or a mixture thereof, and the first temperature can be 40°C to 80°C, preferably can be 50°C to 70°C.

The aforementioned polyol compound can be a bifunctional polyol compound or a polyfunctional polyol compound, which can be a polyoxyethylene ether, a polyoxypropylene ether, a polytetrahydrofuran or a mixture thereof, and a number average molecular weight of the polyol compound is less than 2000. If the number average molecular weight of the polyol compound is greater than 2000, it will be difficult to achieve the requirement of high rigidity composite material.

The aforementioned hydroxyl-containing (methyl)acrylate compound can be a hydroxyethyl methacrylate (2-HEMA), a hydroxyethyl acrylate (2-HEA), a hydroxypropyl methacrylate (2-HPMA), a hydroxypropyl acrylate (2-HPA) or a mixture thereof.

The equivalent ratio of a NCO group of the aforementioned isocyanate compound to an OH group of the aforementioned polyol compound can be 1.5:1 to 10:1. When the ratio of NCO group/OH group is lower than 1.5, the polymerization molecular weight will be high and the rigidity will be insufficient. When the ratio of NCO group/OH group is higher than 10, the rigidity after curing will be too high and the degradation efficiency will be poor. Furthermore, the NCO group of the isocyanate compound will be remained in the step 210, so that the hydroxyl-containing (methyl)acrylate compound in the step 220 can react with the isocyanate compound. Therefore, the equivalent ratio of the OH group of the hydroxyl-containing (methyl)acrylate compound to the NCO group of the isocyanate compound remaining after the polyurethane polymerization step can be 1:1 to 1.05:1.

The aforementioned polyurethane acrylic resin includes the oligomer represented by formula (I), the definition of the oligomer can refer to the aforementioned paragraph, and will not be described herein. In detail, the composition of the aforementioned polyurethane acrylic resin includes the isocyanate compound, the polyol compound, the hydroxyl-containing (methyl)acrylate compound and the diluting monomer, and the aforementioned oligomer is synthesized by the isocyanate compound, the polyol compound, and the hydroxyl-containing (methyl)acrylate compound.

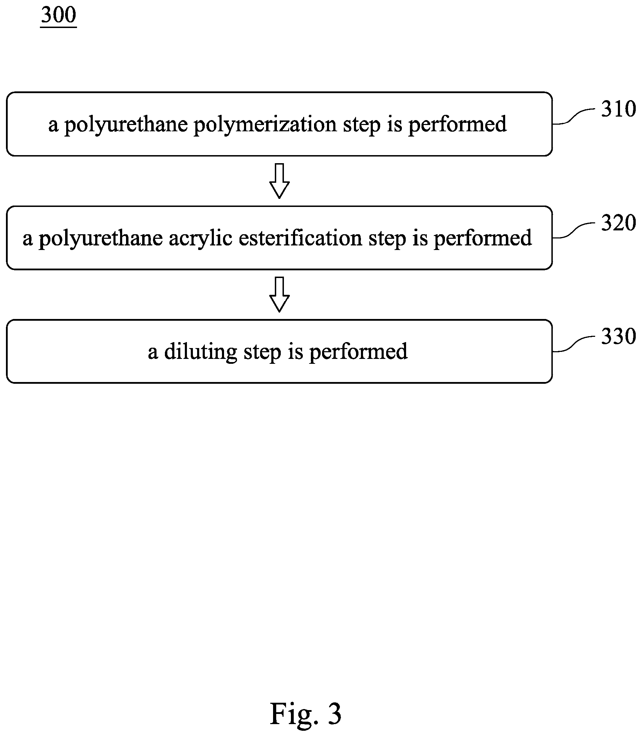

According to the method for degrading the polyurethane acrylic resin material 100 of the present invention, the preparation of the polyurethane acrylic resin also can be referred to Fig. 3, wherein Fig. 3 is a flow chart of a method for preparing a polyurethane acrylic resin 300 as described herein. In Fig. 3, the method for preparing the polyurethane acrylic resin 300 includes a step 310, a step 320 and a step 330.

The details of the step 310 and the step 320 can refer to the step 210 and step 220, and will not be described herein. Specifically, in the step 330, a diluting step is performed, wherein after the second mixture added with the hydroxyl-containing (methyl)acrylate compound reacting at the first temperature (that is a third mixture), the third mixture is cooled and the diluting monomer is added to obtain the polyurethane acrylic resin. Specifically, the step 330 involves the adjustment of operating viscosity, wherein the optimal viscosity of the vacuum infusion resin is 0,100 Pa·s (100 cps) to 0,250 Pa·s (250 cps), while the optimal viscosity of the hand lay-up resin is 0,300 Pa·s (300 cps) to 0,450 Pa·s (450 cps). In the step 330, the appropriate amount of the diluting monomer is added to control the viscosity of the polyurethane acrylic resin, thus, the polyurethane acrylic resin that is more suitable for operation can be obtained to facilitate the subsequent application of the polyurethane acrylic resin material. The aforementioned application refers to the product that is manufactured by using the process such as hand lay-up molding, compression molding, prepreg molding, pultrusion molding, fiber winding, resin transfer molding and vacuum infusion molding. The definition of the diluting monomer can refer to the aforementioned paragraph, and will not be described herein.

Furthermore, the diluting step in the method for preparing the polyurethane acrylic resin 300 can be determined by the viscosity requirement of the operating process, and in the method for preparing the polyurethane acrylic resin 200 as described herein, the polyurethane acrylic resin can be obtained after the polyurethane acrylic esterification step.

Therefore, the polyurethane acrylic resin can use the isocyanate with more than bifunctional group and the polyol to perform the polyurethane chain extension reaction, so as to perform the end-capping with the hydroxyl-containing acrylate compound. Then, diluting with the free radical curable diluting monomer according to the operating viscosity to obtain the degradable polyurethane acrylic resin.

Specifically, the reaction schematic equation of the method for preparing the polyurethane acrylic resin as described herein is shown in Table 1, wherein M is the diluting monomer, which will form the network copolymerization structure with the polyurethane acrylic resin after free radical curing.

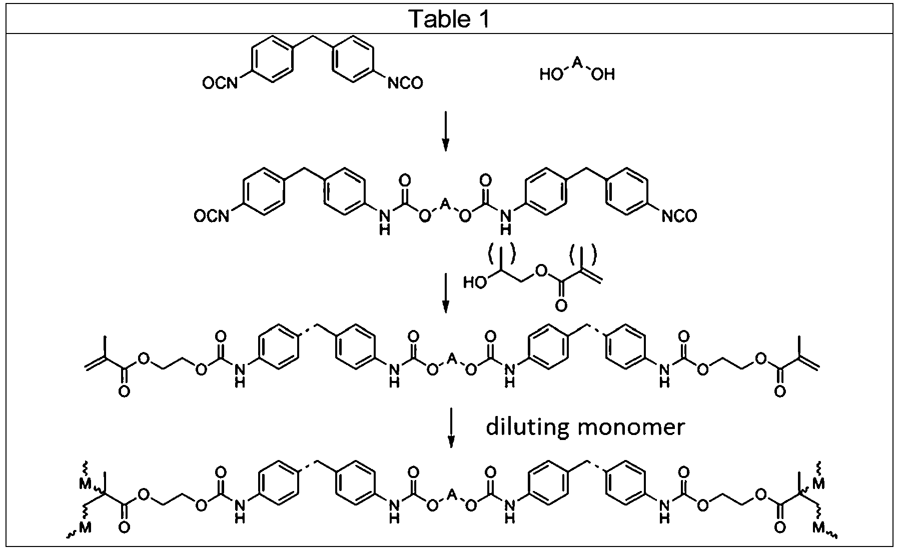

Furthermore, the degradation reaction equation of the polyurethane acrylic resin is shown in Table 2, wherein small molecule carbamate, small molecule ureido ester, polyol and polyacrylic acid molecule are formed by the alcoholysis and aminolysis of the polyurethane acrylic resin structure. Sustained the reaction, the final degradation products are speculated to be aromatic amine compound, oxazolidone, carbamate alcoholamine, and ureadiol.

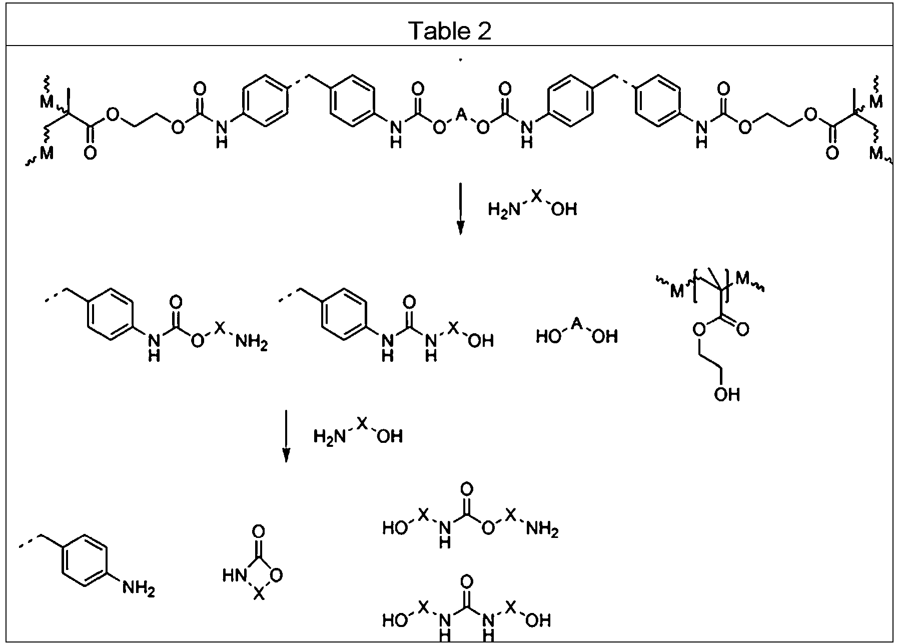

In other embodiments, more than 40% of the total weight of the polyurethane acrylic resin in the method for degrading the polyurethane acrylic resin material of the present invention is the oligomer prepared by the composition for preparing the polyurethane acrylic resin as described herein, and the oligomer has the structure represented by formula (I) as described herein.

The application of the polyurethane acrylic resin material as described herein can be surface coating, adhesive, 3D printing or main structure layer, and it can also add the filler such as titanium dioxide, silicon dioxide, calcium carbonate, aluminum oxide, aluminum hydroxide, silicon carbide or combination thereof according to the function. Therefore, it can be used in the manufacturing of automobile part, marine part, rail car part, sport product part, aviation part, wind turbine part, furniture part, and construction part.

The present invention will be further exemplified by the following specific embodiments so as to facilitate utilizing and practicing the present disclosure completely by the people skilled in the art without over-interpreting and over-experimenting. However, the readers should understand that the present invention should not be limited to these practical details thereof, that is, these practical details are used to describe how to implement the materials and methods of the present disclosure and are not necessary.

### <Synthesis Example>

### <Synthesis of Polyurethane Acrylic Resin>

Synthesis Example 1: 280 g of polymethylene phenyl isocyanate, 0.318 g of 2,5-dihydroxytoluene and 0.159 g of catalyst (DBTDL) are dispersed in 228 g of methyl methacrylate, and mixed evenly in the reactor and heated to 45°C to 60°C for later use. Next, 138.9 g of polypropylene glycol (PPG400) is slowly dropped to the reactor, the dropping time is 40 to 60 minutes, the temperature is controlled below 60°C during the dropping, and the dropping is completed at 45°C to 60°C and the temperature is maintained for 2 to 4 hours. Then, 180.8 g of hydroxyethyl methacrylate (2-HEMA) is dropped slowly, the dropping time is 40 to 60 minutes, the temperature is controlled below 60°C during the dropping, and the dropping is completed at 45°C to 60°C and the temperature is maintained for 2 to 4 hours. When the NCO value is lower than 0.5%, 228 g of methyl methacrylate is added to dilute to obtain the polyurethane acrylic resin of Synthesis Example 1, and the viscosity thereof is 0,130 Pa·s (130 cps).

Synthesis Example 2: 250 g of polymethylene phenyl isocyanate, 0.317 g of 2,5-dihydroxytoluene and 0.159 g of catalyst (DBTDL) are dispersed in 227 g of methyl methacrylate, and mixed evenly in the reactor and heated to 45°C to 60°C for later use. Next, 186 g of polyethylene glycol (PEG600) is slowly added to the reactor, the dropping time is 40 to 60 minutes, the temperature is controlled below 60°C during the dropping, and the dropping is completed at 45°C to 60°C and the temperature is maintained for 2 to 4 hours. Then, 161.4 g of hydroxyethyl methacrylate (2-HEMA) is dropped slowly, the dropping time is 40 to 60 minutes, the temperature is controlled below 60°C during the dropping, and the dropping is completed at 45°C to 60°C and the temperature is maintained for 2 to 4 hours. When the NCO value is lower than 0.5%, 227 g of methyl methacrylate is added to dilute to obtain the polyurethane acrylic resin of Synthesis Example 2, and the viscosity thereof is 320 cps.

Synthesis Example 3: 330 g of polymethylene phenyl isocyanate, 0.308 g of 2,5-dihydroxytoluene and 0.179 g of catalyst (DBTDL) are dispersed in 169 g of methyl methacrylate, and mixed evenly in the reactor and heated to 45°C to 60°C for later use. Next, 61.4 g of polypropylene glycol (PPG400) is slowly dropped to the reactor, the dropping time is 40 to 60 minutes, the temperature is controlled below 60°C during the dropping, and the dropping is completed at 45°C to 60°C and the temperature is maintained for 2 to 4 hours. Then, 293.6 g of hydroxyethyl methacrylate (2-HEMA) is dropped slowly, the dropping time is 40 to 60 minutes, the temperature is controlled below 60°C during the dropping, and the dropping is completed at 45°C to 60°C and the temperature is maintained for 2 to 4 hours. When the NCO value is lower than 0.5%, 169 g of styrene is added to dilute to obtain the polyurethane acrylic resin of Synthesis Example 3, and the viscosity thereof is 0,300 Pa·s (300 cps).

Synthesis Example 4: 270 g of mixture of 2,4-diphenylmethane diisocyanate and 4,4'-diphenylmethane diisocyanate, 0.287 g of 2,5-dihydroxytoluene and 0.143 g of catalyst (DBTDL) are dispersed in 167 g of methyl methacrylate, and mixed evenly in the reactor and heated to 45°C to 60°C for later use. Next, 143.6 g of polypropylene glycol (PPG400) is slowly dropped to the reactor, the dropping time is 40 to 60 minutes, the temperature is controlled below 60°C during the dropping, and the dropping is completed at 45°C to 60°C and the temperature is maintained for 2 to 4 hours. Then, 206.7 g of hydroxypropyl methacrylate (2-HPMA) is dropped slowly, the dropping time is 40 to 60 minutes, the temperature is controlled below 60°C during the dropping, and the dropping is completed at 45°C to 60°C and the temperature is maintained for 2 to 4 hours. When the NCO value is lower than 0.5%, 207 g of methyl methacrylate is added to dilute to obtain the polyurethane acrylic resin of Synthesis Example 4, and the viscosity thereof is 0,150 Pa·s (150 cps).

Synthesis Example 5: 150 g of polymethylene phenyl isocyanate, 0.309 g of 2,5-dihydroxytoluene and 0.181 g of catalyst (DBTDL) are dispersed in 412 g of methyl methacrylate, and mixed evenly in the reactor and heated to 45°C to 60°C for later use. Next, 372.0 g of polypropylene glycol (PPG2000) is slowly dropped to the reactor, the dropping time is 40 to 60 minutes, the temperature is controlled below 60°C during the dropping, and the dropping is completed at 45°C to 60°C and the temperature is maintained for 2 to 4 hours. Then, 96.8 g of hydroxyethyl methacrylate (2-HEMA) is dropped slowly, the dropping time is 40 to 60 minutes, the temperature is controlled below 60°C during the dropping, and the dropping is completed at 45°C to 60°C and the temperature is maintained for 2 to 4 hours. When the NCO value is lower than 0.5%, the polyurethane acrylic resin of Synthesis Example 5 is obtained, and the viscosity thereof is 0,400 Pa·s (400 cps).

### <Preparation of Polyurethane Acrylic Resin Material>

The polyurethane acrylic resin material can be the cured polyurethane acrylic resin and the composite material containing cured polyurethane acrylic resin. In detail, the polyurethane acrylic resin of Synthesis Example 1 to Synthesis Example 5 is cured with the cobalt isooctanoate (0.1% to 0.2%) and methyl ethyl ketone peroxide (1% to 2%) at the room temperature for 24 hours. Then, the cured polyurethane acrylic resin of Synthesis Example 6 to Synthesis Example 10 can be obtained respectively by baking at 105°C for 2 hours. Furthermore, according to different process operation requirements, the curing system of the polyurethane acrylic resin can be adjusted to the appropriate gelation time for fiber impregnation molding at the room temperature, and then baked at 105°C for 2 hours to obtain the cured composite material containing fiber.

### <Example/Comparative Example>

Example 1: 5 g of the cured polyurethane acrylic resin of Synthesis Example 6 and 2-aminoethanol are added into the round-bottom flask equipped with graham condenser at the weight ratio of 1:5, and the temperature is 135°C and maintained for 10 hours to obtain a clear solution, indicating that it can be degraded smoothly.

Example 2: 5 g of the cured polyurethane acrylic resin of Synthesis Example 6 and 2-aminoethoxyethanol are added into the round-bottom flask equipped with graham condenser at the weight ratio of 1:5, and the temperature is 135°C and maintained for 24 hours to obtain a clear solution, indicating that it can be degraded smoothly.

Comparative Example 1: 5 g of the cured polyurethane acrylic resin of Synthesis Example 6 and ethylene glycol are added into the round-bottom flask equipped with graham condenser at the weight ratio of 1:5, and the temperature is 135°C and maintained for 24 hours. A completely undissolved solidified product was shown in Comparative Example 1, indicating the poor degradation efficiency.

Comparative Example 2: 5 g of the cured polyurethane acrylic resin of Synthesis Example 6 and triethylenetetramine are added into the round-bottom flask equipped with graham condenser at the weight ratio of 1:5, and the temperature is 135°C and maintained for 24 hours. A completely undissolved solidified product was shown in Comparative Example 2, indicating the poor degradation efficiency.

The resin type, the cured product type, the degradation solution type, the degradation time (hours) and the degradation state of Example 1, Example 2, Comparative Example 1 and Comparative Example 2 are shown in Table 3.

| Table 3 | | | | | |
|---|---|---|---|---|---|
| | | Example 1 | Example 2 | Comparative Example 1 | Comparative Example 2 |
| Resin type | | Synthesis Example 1 | Synthesis Example 1 | Synthesis Example 1 | Synthesis Example 1 |
| Cured product type | | Synthesis Example 6 | Synthesis Example 6 | Synthesis Example 6 | Synthesis Example 6 |
| Degra dation Soluti on type | Ethylene glycol | X | X | O | X |
| | 2-Aminoethan ol | O | X | X | X |
| | 2-Aminoethox yethanol | X | O | X | X |
| | Triethylenet etramine | X | X | X | O |
| Degradation time | | 10 | 24 | >24 | >24 |
| Degradation state | | Clear | Clear | Cured product | Cured product |

As shown in Table 3, it can be seen that the degradation solution containing the reactive NH₂ group and OH group selected in Example 1 and Example 2 can degrade the polyurethane acrylic resin to obtain the clear solution.

Example 3: 5 g of the cured polyurethane acrylic resin of Synthesis Example 7 and 2-aminoethanol are added into the round-bottom flask equipped with graham condenser at the weight ratio of 1:5, and the temperature is 135°C and maintained for 10 hours to obtain a clear solution, indicating that it can be degraded smoothly.

Example 4: 5 g of the cured polyurethane acrylic resin of Synthesis Example 8 and 2-aminoethanol are added into the round-bottom flask equipped with graham condenser at the weight ratio of 1:5, and the temperature is 135°C and maintained for 10 hours to obtain a clear solution, indicating that it can be degraded smoothly.

Example 5: 5 g of the cured polyurethane acrylic resin of Synthesis Example 9 and 2-aminoethanol are added into the round-bottom flask equipped with graham condenser at the weight ratio of 1:5, and the temperature is 135°C and maintained for 10 hours to obtain a clear solution, indicating that it can be degraded smoothly.

Example 6: 5 g of the cured polyurethane acrylic resin of Synthesis Example 10 and 2-aminoethanol are added into the round-bottom flask equipped with graham condenser at the weight ratio of 1:5, and the temperature is 135°C and maintained for 10 hours to obtain a powdery precipitate, indicating that it can be degraded smoothly.

The resin type, the cured product type, the degradation time (hours) and the degradation state of Example 3 to Example 6 are shown in Table 4.

| Table 4 | | | | |
|---|---|---|---|---|
| | Example 3 | Example 4 | Example 5 | Example 6 |
| Resin type | Synthesis Example 2 | Synthesis Example 3 | Synthesis Example 4 | Synthesis Example 5 |
| Cured product type | Synthesis Example 7 | Synthesis Example 8 | Synthesis Example 9 | Synthesis Example 10 |
| Degradation time | 10 | 10 | 10 | 10 |
| Degradation state | Clear | Clear | Clear | Powdery precipitate |

Example 7: the glass fiber is vacuum infused by Synthesis Example 1, and the fiber content in weight is controlled to 68% to 75%. After complete curing, cutting it into appropriate size and added into the round-bottom flask equipped with graham condenser with 2-aminoethanol at the weight ratio of 1:5, and the temperature is 150°C and maintained for 2 hours to obtain the solution in which the fiber and the polyurethane acrylic resin are separated. Then, the fiber is cleaned by ethanol/water, and the fiber can be recycled smoothly.

Example 8: the carbon fiber is vacuum infused by Synthesis Example 1, and the fiber content in weight is controlled to 50% to 55%. After complete curing, cutting it into appropriate size and added into the round-bottom flask equipped with graham condenser with 2-aminoethanol at the weight ratio of 1:5, and the temperature is 150°C and maintained for 2 hours to obtain the solution in which the fiber and the polyurethane acrylic resin are separated. Then, the fiber is cleaned by ethanol/water, and the fiber can be recycled smoothly.

Example 9: the aromatic polyamide fiber is vacuum infused by Synthesis Example 1, and the fiber content in weight is controlled to 50% to 55%. After complete curing, cutting it into appropriate size and added into the round-bottom flask equipped with graham condenser with 2-aminoethanol at the weight ratio of 1:5, and the temperature is 150°C and maintained for 2 hours to obtain the solution in which the fiber and the polyurethane acrylic resin are separated. Then, the fiber is cleaned by ethanol/water, and the fiber can be recycled smoothly.

Example 10: the glass fiber is hand laid-up by Synthesis Example 3, and the fiber content in weight is controlled to 30% to 50%. After complete curing, cutting it into appropriate size and added into the round-bottom flask equipped with graham condenser with 2-aminoethanol at the weight ratio of 1:5, and the temperature is 150°C and maintained for 2.5 hours to obtain the solution in which the fiber and the polyurethane acrylic resin are separated. Then, the fiber is cleaned by ethanol/water, and the fiber can be recycled smoothly.

The resin type, the fiber type, the degradation time (hours) and the degradation state of Example 7 to Example 10 are shown in Table 5.

| Table 5 | | | | |
|---|---|---|---|---|
| | Example 7 | Example 8 | Example 9 | Example 10 |
| Resin type | Synthesis Example 1 | Synthesis Example 1 | Synthesis Example 1 | Synthesis Example 1 |
| Fiber type | Glass fiber | Carbon fiber | Aromatic polyamide fiber | Glass fiber |
| Degradation time | 2 | 2 | 2 | 2.5 |
| Degradation state | Resin and fiber separation | Resin and fiber separation | Resin and fiber separation | Resin and fiber separation |

As shown in Table 5, it can be seen that after the composite material containing the polyurethane acrylic resin and the fiber is degraded by the degradation solution containing the reactive NH₂ group and OH group, the polyurethane acrylic resin can be decomposed and removed to separate the resin from the fiber and the fiber which is remained without the plastic adhesion, and the purpose of fiber recycling and reusing can be achieved.

In conclusion, the polyurethane acrylic resin material of the present disclosure is degraded by heating the degradation solution containing the reactive NH or NH₂ group and OH group, which can achieve the high-efficiency depolymerization effect, and the degradation solution after the degradation can be recycled and reused to achieve the purpose of waste reduction.

In conclusion, the polyurethane acrylic resin material of the present disclosure is degraded by heating the degradation solution containing the reactive NH or NH₂ group and OH group, which can achieve the high-efficiency depolymerization effect, and the degradation solution after the degradation can be recycled and reused to achieve the purpose of waste reduction.

## Claims

1. A method for degrading a polyurethane acrylic resin material (100), **characterized in** comprising:
providing the polyurethane acrylic resin material (110), wherein the polyurethane acrylic resin material is obtained by curing a polyurethane acrylic resin;
providing a degradation solution (120), wherein the degradation solution at least comprises a degradation compound, and the degradation compound at least comprises a reactive NH or NH₂ group and a reactive OH group;
performing a mixing step (130), wherein the polyurethane acrylic resin material is mixed with the degradation solution to form a degradation mixture; and
performing a heating step (140), wherein the degradation mixture is heated to a degradation temperature and maintained a degradation time to degrade the polyurethane acrylic resin material.

2. The method for degrading the polyurethane acrylic resin material (100) of claim 1, wherein the polyurethane acrylic resin material is a cured polyurethane acrylic resin or a composite material containing cured polyurethane acrylic resin.

3. The method for degrading the polyurethane acrylic resin material (100) of claim 2, wherein the composite material containing cured polyurethane acrylic resin comprises the polyurethane acrylic resin and a fiber.

4. The method for degrading the polyurethane acrylic resin material (100) of claim 3, wherein the fiber is a glass fiber, a carbon fiber, a polyamide fiber or a mixture thereof.

5. The method for degrading the polyurethane acrylic resin material (100) of any one of claims 1 to 4, wherein the degradation compound has a structure represented by formula (i): 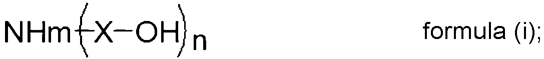 wherein X is an alkyl group or an oxyalkyl group, m is 1 or 2 and m + n = 3.

6. The method for degrading the polyurethane acrylic resin material (100) of any one of claims 1 to 5, wherein the degradation temperature is from 135°C to a boiling point temperature of the degradation solution.

7. The method for degrading the polyurethane acrylic resin material (100) of any one of claims 1 to 6, wherein the degradation time is 2 hours to 24 hours.

8. The method for degrading the polyurethane acrylic resin material (100) of any one of claims 1 to 7, wherein more than 40% of a total weight of the polyurethane acrylic resin is an oligomer.

9. The method for degrading the polyurethane acrylic resin material (100) of claim 8, wherein the oligomer has a structure represented by formula (I): 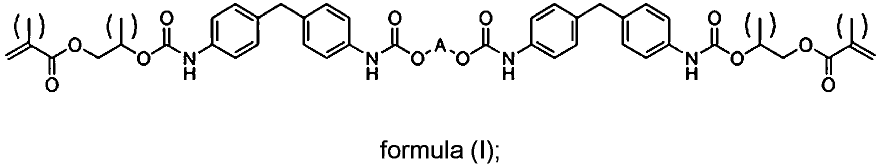 wherein A is a polyethoxy group, a polypropoxy group or a polytetrahydrofuran group.

10. The method for degrading the polyurethane acrylic resin material (100) of any one of claims 1 to 9, wherein a preparation of the polyurethane acrylic resin (200) comprises following steps:
performing a polyurethane polymerization step (210), wherein an isocyanate compound, an inhibitor and a catalyst are mixed in a diluting monomer, and heated to a first temperature to obtain a first mixture, then a polyol compound is added to the first mixture and maintained at the first temperature to react to obtain a second mixture; and
performing a polyurethane acrylic esterification step (220), wherein a hydroxyl-containing (methyl)acrylate compound is added to the second mixture and maintained at the first temperature to react to obtain the polyurethane acrylic resin.

11. The method for degrading the polyurethane acrylic resin material (100) of claim 10, wherein the preparation of the polyurethane acrylic resin (200) further comprises:
performing a diluting step, wherein after the second mixture added with the hydroxyl-containing (methyl)acrylate compound reacting at the first temperature, the second mixture is cooled and the diluting monomer is added to obtain the polyurethane acrylic resin.

12. The method for degrading the polyurethane acrylic resin material (100) of claims 10 or 11, wherein the isocyanate compound is a bifunctional isocyanate compound or a polyfunctional isocyanate compound.

13. The method for degrading the polyurethane acrylic resin material (100) of claim 12, wherein the bifunctional isocyanate compound or the polyfunctional isocyanate compound is an aromatic ring isocyanate.

14. The method for degrading the polyurethane acrylic resin material (100) of claim 13, wherein the aromatic ring isocyanate is a toluene diisocyanate, a poly(methylene phenyl isocyanate), a diphenylmethane diisocyanate or a mixture thereof.

15. The method for degrading the polyurethane acrylic resin material (100) of any one of claims 10 to 14, wherein the polyol compound is a bifunctional polyol compound or a polyfunctional polyol compound, and a number average molecular weight of the polyol compound is less than 2000.

16. The method for degrading the polyurethane acrylic resin material (100) of any one of claims 10 to 15, wherein the polyol compound is a polyoxyethylene ether, a polyoxypropylene ether, a polytetrahydrofuran or a mixture thereof.

17. The method for degrading the polyurethane acrylic resin material (100) of any one of claims 10 to 16, wherein the polyurethane acrylic resin has an oligomer represented by formula (I): 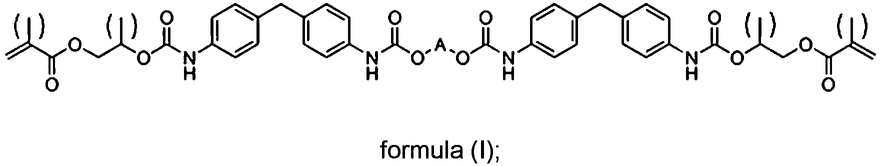 wherein A is a polyethoxy group, a polypropoxy group or a polytetrahydrofuran group.

18. The method for degrading the polyurethane acrylic resin material (100) of any one of claims 10 to 17, wherein an equivalent ratio of a NCO group of the isocyanate compound to an OH group of the polyol compound is 1.5:1 to 10:1.

19. The method for degrading the polyurethane acrylic resin material (100) of any one of claims 10 to 18, wherein the hydroxyl-containing (methyl)acrylate compound is a hydroxyethyl methacrylate, a hydroxyethyl acrylate, a hydroxypropyl methacrylate, a hydroxypropyl acrylate or a mixture thereof.

20. The method for degrading the polyurethane acrylic resin material (100) of any one of claims 10 to 19, wherein the diluting monomer is a free radical curable diluting monomer, and is a (methyl)methacrylate, a (methyl)ethyl acrylate, a (methyl)hydroxyethyl acrylate, a (methyl)hydroxypropyl acrylate, a (methyl)isobornyl acrylate, a (methyl)cyclohexyl acrylate, a (methyl) tetrahydrofurfuryl acrylate, a styrene, a methyl styrene, a vinyl toluene or a mixture thereof.

21. The method for degrading the polyurethane acrylic resin material (100) of any one of claims 10 to 20, wherein the first temperature is 40°C to 80°C.

22. The method for degrading the polyurethane acrylic resin material (100) of any one of claims 10 to 21, wherein the catalyst is an organic tin, an organic bismuth or an organic zinc, and an added amount of the catalyst is 50 ppm to 200 ppm of a total content of the polyurethane acrylic resin.

23. The method for degrading the polyurethane acrylic resin material (100) of any one of claims 10 to 22, wherein an equivalent ratio of an OH group of the hydroxyl-containing (methyl)acrylate compound to a NCO group of the isocyanate compound remaining after the polyurethane polymerization step (210) is 1:1 to 1.05:1.

## Patentansprüche

1. Verfahren zum Abbau eines Polyurethan-Acrylharzmaterials (100), **dadurch gekennzeichnet, dass** es umfasst:
Bereitstellen des Polyurethan-Acrylharzmaterials (110), wobei das Polyurethan-Acrylharzmaterial durch Aushärten eines Polyurethan-Acrylharzes erhalten wird;
Bereitstellen einer Abbaulösung (120), wobei die Abbaulösung mindestens eine Abbauverbindung umfasst und die Abbauverbindung mindestens eine reaktive NH- oder NH₂-Gruppe und eine reaktive OH-Gruppe umfasst;
Durchführen eines Mischschritts (130), wobei das Polyurethan-Acrylharzmaterial mit der Abbaulösung gemischt wird, um eine Abbaumischung zu bilden; und
Durchführen eines Erhitzungsschritts (140), wobei die Abbaumischung auf eine Abbautemperatur erhitzt und für eine Abbauzeit aufrechterhalten wird, um das Polyurethan-Acrylharzmaterial abzubauen.

2. Verfahren zum Abbau des Polyurethan-Acrylharzmaterials (100) nach Anspruch 1, wobei das Polyurethan-Acrylharzmaterial ein ausgehärtetes Polyurethan-Acrylharz oder ein Verbundmaterial ist, das ausgehärtetes Polyurethan-Acrylharz enthält.

3. Verfahren zum Abbau des Polyurethan-Acrylharzmaterials (100) nach Anspruch 2, wobei das Verbundmaterial, das ausgehärtetes Polyurethan-Acrylharz enthält, das Polyurethan-Acrylharz und eine Faser umfasst.

4. Verfahren zum Abbau des Polyurethan-Acrylharzmaterials (100) nach Anspruch 3, wobei die Faser eine Glasfaser, eine Kohlenstofffaser, eine Polyamidfaser oder eine Mischung davon ist.

5. Verfahren zum Abbau des Polyurethan-Acrylharzmaterials (100) nach einem der Ansprüche 1 bis 4, wobei die Abbauverbindung eine durch die Formel (i) dargestellte Struktur aufweist: 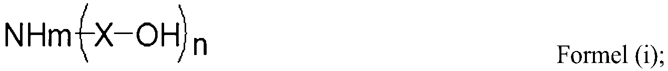 wobei X eine Alkylgruppe oder eine Oxyalkylgruppe ist, m 1 oder 2 ist und m + n = 3 ist.

6. Verfahren zum Abbau des Polyurethan-Acrylharzmaterials (100) nach einem der Ansprüche 1 bis 5, wobei die Abbautemperatur zwischen 135°C und der Siedetemperatur der Abbaulösung liegt.

7. Verfahren zum Abbau des Polyurethan-Acrylharzmaterials (100) nach einem der Ansprüche 1 bis 6, wobei die Abbauzeit zwischen 2 Stunden und 24 Stunden liegt.

8. Verfahren zum Abbau des Polyurethan-Acrylharzmaterials (100) nach einem der Ansprüche 1 bis 7, wobei mehr als 40% des Gesamtgewichts des Polyurethan-Acrylharzes ein Oligomer sind.

9. Verfahren zum Abbau des Polyurethan-Acrylharzmaterials (100) nach Anspruch 8, wobei das Oligomer eine Struktur aufweist, dargestellt durch die Formel (I): 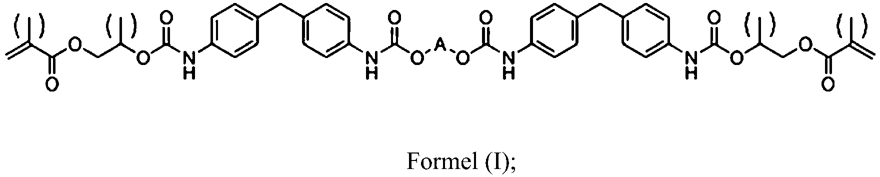 wobei A eine Polyethoxygruppe, eine Polypropoxygruppe oder eine Polytetrahydrofurangruppe ist.

10. Verfahren zum Abbau des Polyurethan-Acrylharzmaterials (100) nach einem der Ansprüche 1 bis 9, wobei die Herstellung des Polyurethan-Acrylharzes (200) die folgenden Schritte umfasst:
Durchführen eines Polyurethan-Polymerisationsschritts (210), wobei eine Isocyanatverbindung, ein Inhibitor und ein Katalysator in einem verdünnenden Monomer gemischt und auf eine erste Temperatur erhitzt werden, um eine erste Mischung zu erhalten, dann eine Polyolverbindung zu der ersten Mischung hinzugefügt und bei der ersten Temperatur gehalten wird, um zu reagieren, um eine zweite Mischung zu erhalten; und
Durchführen eines Polyurethan-Acryl-Veresterungsschritts (220), wobei eine hydroxylhaltige (Methyl)acrylatverbindung zu der zweiten Mischung hinzugefügt und bei der ersten Temperatur gehalten wird, um zu reagieren, um das Polyurethan-Acrylharz zu erhalten.

11. Verfahren zum Abbau des Polyurethan-Acrylharzmaterials (100) nach Anspruch 10, wobei die Herstellung des Polyurethan-Acrylharzes (200) ferner umfasst:
Durchführen eines Verdünnungsschritts, wobei, nach der Reaktion der zweiten Mischung, der die hydroxylhaltige (Methyl)acrylatverbindung zugesetzt wurde, bei der ersten Temperatur, die zweite Mischung abgekühlt und das verdünnende Monomer zugegeben wird, um das Polyurethan-Acrylharz zu erhalten.

12. Verfahren zum Abbau des Polyurethan-Acrylharzmaterials (100) nach Anspruch 10 oder 11, wobei die Isocyanatverbindung eine bifunktionelle Isocyanatverbindung oder eine polyfunktionelle Isocyanatverbindung ist.

13. Verfahren zum Abbau des Polyurethan-Acrylharzmaterials (100) nach Anspruch 12, wobei die bifunktionelle Isocyanatverbindung oder die polyfunktionelle Isocyanatverbindung ein aromatisches Ringisocyanat ist.

14. Verfahren zum Abbau des Polyurethan-Acrylharzmaterials (100) nach Anspruch 13, wobei das aromatische Ringisocyanat ein Toluoldiisocyanat, ein Poly(methylenphenylisocyanat), ein Diphenylmethandiisocyanat oder eine Mischung davon ist.

15. Verfahren zum Abbau des Polyurethan-Acrylharzmaterials (100) nach einem der Ansprüche 10 bis 14, wobei die Polyolverbindung eine bifunktionelle Polyolverbindung oder eine polyfunktionelle Polyolverbindung ist und das zahlenmittlere Molekulargewicht der Polyolverbindung weniger als 2000 beträgt.

16. Verfahren zum Abbau des Polyurethan-Acrylharzmaterials (100) nach einem der Ansprüche 10 bis 15, wobei die Polyolverbindung ein Polyoxyethylenether, ein Polyoxypropylenether, ein Polytetrahydrofuran oder eine Mischung davon ist.

17. Verfahren zum Abbau des Polyurethan-Acrylharzmaterials (100) nach einem der Ansprüche 10 bis 16, wobei das Polyurethan-Acrylharz ein Oligomer, dargestellt durch die Formel (I), aufweist: 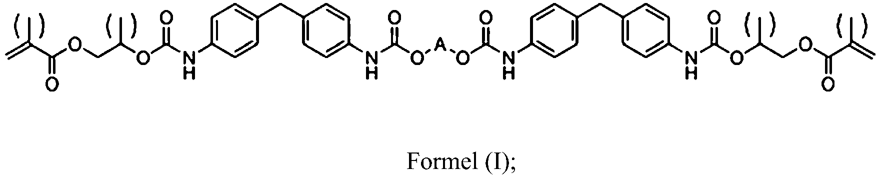 wobei A eine Polyethoxygruppe, eine Polypropoxygruppe oder eine Polytetrahydrofurangruppe ist.

18. Verfahren zum Abbau des Polyurethan-Acrylharzmaterials (100) nach einem der Ansprüche 10 bis 17, wobei das Äquivalentverhältnis einer NCO-Gruppe der Isocyanatverbindung zu einer OH-Gruppe der Polyolverbindung 1,5:1 bis 10:1 beträgt.

19. Verfahren zum Abbau des Polyurethan-Acrylharzmaterials (100) nach einem der Ansprüche 10 bis 18, wobei die hydroxylhaltige (Methyl)acrylatverbindung ein Hydroxyethylmethacrylat, ein Hydroxyethylacrylat, ein Hydroxypropylmethacrylat, ein Hydroxypropylacrylat oder eine Mischung davon ist.

20. Verfahren zum Abbau des Polyurethan-Acrylharzmaterials (100) nach einem der Ansprüche 10 bis 19, wobei das verdünnende Monomer ein durch freie Radikale härtbares verdünnendes Monomer ist und ein (Methyl)methacrylat, ein (Methyl)ethylacrylat, ein (Methyl)hydroxyethylacrylat, ein (Methyl)hydroxypropylacrylat, ein (Methyl)isobornylacrylat, ein (Methyl)cyclohexylacrylat, ein (Methyl)tetrahydrofurfurylacrylat, ein Styrol, ein Methylstyrol, ein Vinyltoluol oder eine Mischung davon ist.

21. Verfahren zum Abbau des Polyurethan-Acrylharzmaterials (100) nach einem der Ansprüche 10 bis 20, wobei die erste Temperatur 40°C bis 80°C beträgt.

22. Verfahren zum Abbau des Polyurethan-Acrylharzmaterials (100) nach einem der Ansprüche 10 bis 21, wobei der Katalysator ein organisches Zinn, ein organisches Wismut oder ein organisches Zink ist und die zugesetzte Menge des Katalysators 50 ppm bis 200 ppm des Gesamtgehalts des Polyurethan-Acrylharzes beträgt.

23. Verfahren zum Abbau des Polyurethan-Acrylharzmaterials (100) nach einem der Ansprüche 10 bis 22, wobei das Äquivalentverhältnis einer OH-Gruppe der hydroxylhaltigen (Methyl-)acrylatverbindung zu einer NCO-Gruppe der nach dem Polyurethan-Polymerisationsschritt (210) verbleibenden Isocyanatverbindung 1:1 bis 1,05:1 beträgt.

## Revendications

1. Procédé pour dégrader un matériau en résine acrylique de polyuréthane (100), **caractérisé en ce qu'**il comporte de :
fournir le matériau en résine acrylique de polyuréthane (110), dans lequel le matériau en résine acrylique de polyuréthane est obtenu en durcissant une résine acrylique de polyuréthane ;
fournir une solution de dégradation (120), dans lequel la solution de dégradation comporte au moins un composé de dégradation, et le composé de dégradation comporte au moins un groupe NH ou NH₂ réactif et un groupe OH réactif ;
réaliser une étape de mélange (130), dans laquelle le matériau en résine acrylique de polyuréthane est mélangé avec la solution de dégradation pour former un mélange de dégradation ; et
réaliser une étape de chauffage (140), dans laquelle le mélange de dégradation est chauffé jusqu'à une température de dégradation et maintenu pendant un temps de dégradation pour dégrader le matériau en résine acrylique de polyuréthane.

2. Procédé pour dégrader le matériau en résine acrylique de polyuréthane (100) selon la revendication 1, dans lequel le matériau en résine acrylique de polyuréthane est une résine acrylique de polyuréthane durcie ou un matériau composite contenant une résine acrylique de polyuréthane durcie.

3. Procédé pour dégrader le matériau en résine acrylique de polyuréthane (100) selon la revendication 2, dans lequel le matériau composite contenant de la résine acrylique de polyuréthane durcie comporte la résine acrylique de polyuréthane et une fibre.

4. Procédé pour dégrader le matériau en résine acrylique de polyuréthane (100) selon la revendication 3, dans lequel la fibre est une fibre de verre, une fibre de carbone, une fibre de polyamide ou un mélange de celles-ci.

5. Procédé pour dégrader le matériau en résine acrylique de polyuréthane (100) selon l'une quelconque des revendications 1 à 4, dans lequel le composé de dégradation a une structure représentée par la formule (i) : 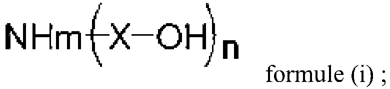 dans laquelle X est un groupe alkyle ou un groupe oxyalkyle, m vaut 1 ou 2 et m + n = 3.

6. Procédé pour dégrader le matériau en résine acrylique de polyuréthane (100) selon l'une quelconque des revendications 1 à 5, dans lequel la température de dégradation est de 135 °C jusqu'à une température de point d'ébullition de la solution de dégradation.

7. Procédé pour dégrader le matériau en résine acrylique de polyuréthane (100) selon l'une quelconque des revendications 1 à 6, dans lequel le temps de dégradation est de 2 heures à 24 heures.

8. Procédé pour dégrader le matériau en résine acrylique de polyuréthane (100) selon l'une quelconque des revendications 1 à 7, dans lequel plus de 40 % d'un poids total de la résine acrylique de polyuréthane est un oligomère.

9. Procédé pour dégrader le matériau en résine acrylique de polyuréthane (100) selon la revendication 8, dans lequel l'oligomère a une structure représentée par la formule (I) : 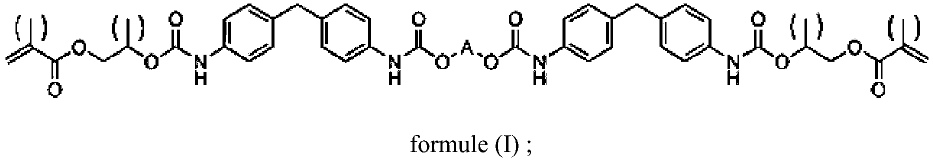 dans laquelle A est un groupe polyéthoxy, un groupe polypropoxy ou un groupe polytétrahydrofurane.

10. Procédé pour dégrader le matériau en résine acrylique de polyuréthane (100) selon l'une quelconque des revendications 1 à 9, dans lequel une préparation de la résine acrylique de polyuréthane (200) comporte les étapes suivantes consistant à :
réaliser une étape de polymérisation du polyuréthanne (210), dans laquelle un composé isocyanate, un inhibiteur et un catalyseur sont mélangés dans un monomère de dilution, et chauffés jusqu'à une première température pour obtenir un premier mélange, puis un composé polyol est ajouté au premier mélange et maintenu à la première température pour réagir afin d'obtenir un second mélange ; et
réaliser une étape d'estérification acrylique du polyuréthanne (220), dans laquelle un composé (méthyl)acrylate contenant un hydroxyle est ajouté au second mélange et maintenu à la première température pour réagir afin d'obtenir la résine acrylique de polyuréthanne.

11. Procédé pour dégrader le matériau en résine acrylique de polyuréthane (100) selon la revendication 10, dans lequel la préparation de la résine acrylique de polyuréthane (200) comporte en outre de :
réaliser une étape de dilution, dans laquelle, après réaction du second mélange auquel a été ajouté le composé (méthyl)acrylate contenant un hydroxyle à la première température, le second mélange est refroidi et le monomère de dilution est ajouté pour obtenir la résine acrylique de polyuréthane.

12. Procédé pour dégrader le matériau en résine acrylique de polyuréthane (100) selon la revendication 10 ou 11, dans lequel le composé isocyanate est un composé isocyanate bifonctionnel ou un composé isocyanate polyfonctionnel.

13. Procédé pour dégrader le matériau en résine acrylique de polyuréthane (100) selon la revendication 12, dans lequel le composé isocyanate bifonctionnel ou le composé isocyanate polyfonctionnel est un isocyanate à cycle aromatique.

14. Procédé pour dégrader le matériau en résine acrylique de polyuréthane (100) selon la revendication 13, dans lequel l'isocyanate à cycle aromatique est un diisocyanate de toluène, un poly(isocyanate de méthylène phényle), un diisocyanate de diphénylméthane ou un mélange de ceux-ci.

15. Procédé pour dégrader le matériau en résine acrylique de polyuréthane (100) selon l'une quelconque des revendications 10 à 14, dans lequel le composé polyol est un composé polyol bifonctionnel ou un composé polyol polyfonctionnel, et une masse moléculaire moyenne en nombre du composé polyol est inférieure à 2 000.

16. Procédé pour dégrader le matériau en résine acrylique de polyuréthane (100) selon l'une quelconque des revendications 10 à 15, dans lequel le composé polyol est un éther de polyoxyéthylène, un éther de polyoxypropylène, un polytétrahydrofurane ou un mélange de ceux-ci.

17. Procédé pour dégrader le matériau en résine acrylique de polyuréthane (100) selon l'une quelconque des revendications 10 à 16, dans lequel la résine acrylique de polyuréthane a un oligomère représenté par la formule (I) : 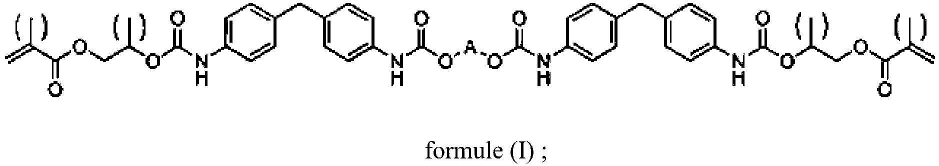 dans laquelle A est un groupe polyéthoxy, un groupe polypropoxy ou un groupe polytétrahydrofurane.

18. Procédé pour dégrader le matériau en résine acrylique de polyuréthane (100) selon l'une quelconque des revendications 10 à 17, dans lequel un rapport équivalent d'un groupe NCO du composé isocyanate sur un groupe OH du composé polyol est de 1,5:1 à 10:1.

19. Procédé pour dégrader le matériau en résine acrylique de polyuréthane (100) selon l'une quelconque des revendications 10 à 18, dans lequel le composé (méthyl)acrylate contenant un hydroxyle est un méthacrylate d'hydroxyéthyle, un acrylate d'hydroxyéthyle, un méthacrylate d'hydroxypropyle, un acrylate d'hydroxypropyle ou un mélange de ceux-ci.

20. Procédé pour dégrader le matériau en résine acrylique de polyuréthane (100) selon l'une quelconque des revendications 10 à 19, dans lequel le monomère de dilution est un monomère de dilution durcissable à radicaux libres, et est un (méthyl)méthacrylate, un (méthyl)éthyl acrylate, un (méthyl)hydroxyéthyl acrylate, un (méthyl)hydroxypropyl acrylate, un (méthyl)isobornyl acrylate, un (méthyl)cyclohexyl acrylate, un (méthyl)tétrahydrofurfuryl acrylate, un styrène, un méthyl styrène, un vinyl toluène ou un mélange de ceux-ci.

21. Procédé pour dégrader le matériau en résine acrylique de polyuréthane (100) selon l'une quelconque des revendications 10 à 20, dans lequel la première température est de 40 °C à 80 °C.

22. Procédé pour dégrader le matériau en résine acrylique de polyuréthane (100) selon l'une quelconque des revendications 10 à 21, dans lequel le catalyseur est un étain organique, un bismuth organique ou un zinc organique, et une quantité ajoutée du catalyseur est de 50 ppm à 200 ppm d'une teneur totale en résine acrylique de polyuréthane.

23. Procédé pour dégrader le matériau en résine acrylique de polyuréthane (100) selon l'une quelconque des revendications 10 à 22, dans lequel un rapport équivalent d'un groupe OH du composé (méthyl)acrylate contenant un hydroxyle sur un groupe NCO du composé isocyanate restant après l'étape de polymérisation du polyuréthane (210) est de 1:1 à 1,05:1.
